# EUROPEAN PATENT APPLICATION

(11) **EP 4 395 242 A1**
(43) Date of publication of application: **03.07.2024**
(21) Application number: 23218979.5
(22) Date of filing: 21.12.2023
(51) Int. Cl.: H04L 12/18, H04L 65/4038

(54) **ARTIFICIAL INTELLIGENCE SOCIAL FACILITATOR ENGINE**

(30) Priority: 30.12.2022 US 202218148592
(71) Applicant: Meta Platforms, Inc., Menlo Park, CA 94025 (US)
(72) Inventor: WOODS, Philip, Menlo Park (US); TSE, Daniel Gar-Shon, Menlo Park (US); MUÑOZ, Alejandro Castillejo, Menlo Park (US); AGRAWAL, Pravesh, Menlo Park (US)
(74) Representative: Murgitroyd & Company

(57) **Abstract**

Aspects of the present disclosure are directed to providing an artificial intelligence social facilitator engine (e.g., an "Al social bot") that can facilitate group conversations occurring over a network. The Al social bot can perform a series of logical steps in 3 phases: 1) a detect phase, 2) a decide phase, and 3) a deliver phase. In the detect phase, the Al social bot can look at many aspects of the conversation that already exist and try to find information that could be relevant to a decision about what to say. In the decide phase, the Al social bot can analyze the information and decide what type of conversational move to make. In the deliver phase, the Al social bot can use a large language model to formulate an actual text response corresponding to the information and strategy respectively formulated by the detect phase and the decide phase.

## Description

### TECHNICAL FIELD

The present disclosure is directed to an artificial intelligence (Al) social facilitator engine.

### BACKGROUND

Online communication has become increasingly popular. In recent years, users have turned to the Internet to communicate with work colleagues, friends, family, and even strangers. A user can now join a textual and/or audible chatroom, a multiplayer video game, a multiplayer artificial reality (XR) experience, or other online experience with other users located far and wide to communicate and socialize, without ever needing to leave their own home. Some conventional systems have introduced chatbots to simulate intelligent conversation with users over the Internet when live users are not available. Chatbots have traditionally been used to automate and/or mimic online interactions between a user and a service, such as to provide assistance with customer service or troubleshooting on behalf of an organization.

### SUMMARY OF THE DISCLOSURE

In accordance with a first aspect of the present disclosure, there is provided a method for facilitating a group conversation by an artificial intelligence social facilitator engine, the method comprising: generating a metadata object of signals derived from the group conversation by analyzing one or more existing features of the group conversation, the group conversation including multiple users participating in the group conversation via respective user devices; identifying a first action of multiple possible actions with respect to the group conversation using the metadata object of signals, the first action being a decision not to respond by the artificial intelligence social facilitator engine in the group conversation; receiving one or more user responses to the group conversation from one or more user devices associated with respective users of the multiple users; updating the metadata object of signals derived from the group conversation by analyzing one or more new features of the group conversation based on the received one or more user responses; identifying a second action of the multiple possible actions using the updated metadata object of signals, the second action being a decision to respond by the artificial intelligence social facilitator engine in the group conversation, wherein the decision to respond includes a response type; and generating, by the artificial intelligence social facilitator engine, a natural language response to the group conversation by applying a model to a transcript of the group conversation, the updated metadata object of signals, and the response type.

In some embodiments, the natural language response is a deflection of a topic included in at least one of the one or more user responses to the group conversation.

In some embodiments, the metadata object of signals includes a prediction that a user device of the respective user devices will transmit a user response of the one or more user responses in the group conversation next, an wherein the decision not to respond by the artificial intelligence social facilitator engine in the group conversation is based on the prediction that the user device of the respective user devices will transmit the user response in the group conversation next.

In some embodiments, the metadata object of signals indicates at least one of a prediction of which user device of the respective user devices will transmit a user response of the one or more user responses next, one or more facts about one or more users of the multiple users, a topic of the group conversation, or any combination thereof.

In some embodiments, the decision not to respond, by the artificial intelligence social facilitator engine in the group conversation, is based on a tag of a user in the group conversation by another user of the multiple users.

In some embodiments, the decision to respond, by the artificial intelligence social facilitator engine in the group conversation, is based on a tag of the artificial intelligence social facilitator engine in the group conversation by a user of the multiple users.

In some embodiments, the model is a large language model being at least ten gigabytes in size, the large language model being trained on text data and applying at least one of artificial intelligence, deep learning, or both, to generate the natural language response.

In some embodiments, the group conversation is at least one of a textual conversation, an audible conversation, or both.

In some embodiments, the group conversation is within an artificial reality experience.

In accordance with a further aspect of the present disclosure, there is provided a computer-readable storage medium storing instructions that, when executed by a computing system, cause the computing system to perform a process for facilitating a group conversation by an artificial intelligence social facilitator engine, the process comprising: generating a metadata object of signals derived from the group conversation by analyzing one or more existing features of the group conversation, the group conversation including multiple users participating in the group conversation via respective user devices; identifying an action of multiple possible actions with respect to the group conversation using the metadata object of signals, the action being mapped to at least one of the one or more existing features of the group conversation, and the action including a response type; and generating, by the artificial intelligence social facilitator engine, a natural language response to the group conversation in accordance with the identified action by applying a model to a transcript of the group conversation, the metadata object of signals, and the response type.

In some embodiments, the action is a first action, and wherein the process further comprises: receiving one or more user responses to the group conversation from one or more user devices associated with respective users of the multiple users; updating the metadata object of signals derived from the group conversation by analyzing one or more new features of the group conversation based on the received one or more user responses; and identifying a second action of the multiple possible actions using the updated metadata object of signals, the second action being a decision not to respond by the artificial intelligence social facilitator engine in the group conversation.

In some embodiments, the updated metadata object of signals includes a prediction that a user device of the respective user devices will transmit a user response of the one or more user responses in the group conversation next, and wherein the decision not to respond by the artificial intelligence social facilitator engine in the group conversation is based on the prediction that the user device of the respective user devices will transmit the user response in the group conversation next.

In some embodiments, the decision not to respond, by the artificial intelligence social facilitator engine in the group conversation, is based on a tag of a user in the group conversation by another user of the multiple users.

In some embodiments, the natural language response is a deflection of a topic included in at least one of the one or more user responses to the group conversation.

In some embodiments, the action is a decision to respond by the artificial intelligence social facilitator engine in the group conversation, and wherein the decision to respond, by the artificial intelligence in the group conversation, is based on a tag of the artificial intelligence social facilitator engine in the group conversation by a user of the multiple users.

In accordance with a further aspect of the present disclosure, there is provided a computing system for facilitating a group conversation by an artificial intelligence social facilitator engine, the computing system comprising: one or more processors; and one or more memories storing instructions that, when executed by the one or more processors, cause the computing system to perform a process comprising: generating a metadata object of signals derived from the group conversation by analyzing one or more existing features of the group conversation, the group conversation including multiple users participating in the group conversation via respective user devices; identifying an action of multiple possible actions with respect to the group conversation using the metadata object of signals, the action being mapped to at least one of the one or more existing features of the group conversation, and the action including a response type; and generating, by the artificial intelligence social facilitator engine, a natural language response to the group conversation in accordance with the identified action by applying a model to a transcript of the group conversation, the metadata object of signals, and the response type.

In some embodiments, the action is a first action, and wherein the process further comprises: receiving one or more user responses to the group conversation from one or more user devices associated with respective users of the multiple users; updating the metadata object of signals derived from the group conversation by analyzing one or more new features of the group conversation based on the received one or more user responses; and identifying a second action of the multiple possible actions using the updated metadata object of signals, the second action being a decision not to respond by the artificial intelligence social facilitator engine in the group conversation.

In some embodiments, the metadata object of signals indicates at least one of a prediction of which user device of the respective user devices will transmit a user response of the one or more user responses next, one or more facts about one or more users of the multiple users, a topic of the group conversation, or any combination thereof.

In some embodiments, the model is a large language model being at least ten gigabytes in size, the large language model being trained on text data and applying at least one of artificial intelligence, deep learning, or both, to generate the natural language response.

In some embodiments, the group conversation is within an artificial reality experience.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

Figure 1 is a block diagram illustrating an overview of devices on which some implementations of the present technology can operate.
Figure 2 is a block diagram illustrating an overview of an environment in which some implementations of the present technology can operate.
Figure 3 is a conceptual diagram illustrating an example group conversation facilitated by an artificial intelligence (Al) social facilitator engine.
Figure 4 is a block diagram illustrating components which, in some implementations, can be used in a system employing the disclosed technology.
Figure 5 is a flow diagram illustrating a process used in some implementations of the present technology for facilitating a group conversation by an artificial intelligence (Al) social facilitator engine.
Figure 6 is a block diagram illustrating an overview of an artificial intelligence (Al) social facilitator engine according to some implementations of the present technology.
Figures 7A-7B are flow diagrams illustrating an overview of decisions made by an artificial intelligence (Al) social facilitator system in a decide phase according to some implementations of the present technology.

The techniques introduced here may be better understood by referring to the following Detailed Description in conjunction with the accompanying drawings, in which like reference numerals indicate identical or functionally similar elements.

### DETAILED DESCRIPTION

Users in an online social interaction often find conversations awkward and difficult to maintain, e.g., due to unfamiliarity between participants, difficult subject matter, delays in technical communications, etc. Further, because chatbots are often limited to stored or preprogrammed responses on a select number of topics, conversation with a chatbot can be clumsy and unnatural. Aspects of the present disclosure are directed to providing an artificial intelligence (Al) social facilitator engine that can facilitate group conversations (e.g., in an artificial reality (XR) world, in a chatroom, on a comment thread, etc.) as a chatbot.

The Al social facilitator engine can perform a series of logical steps in 3 phases: 1) a detect phase, 2) a decide phase, and 3) a deliver phase. In the detect phase, the Al social facilitator engine can look at many aspects of the conversation that already exist and try to find information that could be relevant to a decision about what to say next, e.g., by identifying who will speak next, understanding what the topic of conversation is, determining known facts about the speakers relevant to the conversation, etc. In the decide phase, the AI social facilitator engine can analyze the information and decide what type of conversational move to make, e.g., introducing someone new, connecting two people, deflecting a certain topic, etc. In the deliver phase, the AI social facilitator engine can use a model, such as a large language model, to formulate a text response corresponding to the information and strategy respectively formulated by the detect phase and the decide phase. In other words, the AI social facilitator engine can decide who to say something to, what type of thing to say (or not to say), and what exactly to say to facilitate a group conversation.

For example, an AI social facilitator engine can welcome a user, Lawrence, to a chatroom as a first turn (i.e., a first message) of a group conversation. The AI social facilitator engine can ask Lawrence a question to begin the conversation, such as, "Where are you from?". Lawrence can respond with an answer to the question, such as "Kansas City, Missouri." The AI social facilitator can store data representative of this fact about Lawrence, and, in some implementations, can query a database for further information about Kansas City, Missouri, that could be used to facilitate the conversation. Another user, Jennifer, can join the conversation, and the AI social facilitator engine can welcome her to the conversation. For example, the AI social facilitator engine can state, "Welcome to the conversation, Jennifer! Lawrence is here also. He's from Kansas City, Missouri, where it is very cold today." Jennifer can respond, "I'm also from Kansas City, Missouri! @Lawrence, are you a Kansas City football fan?" Based on Jennifer's tag of Lawrence, the AI social facilitator engine can allow Lawrence to take the next turn, and so on and so forth.

Some implementations can facilitate textual and/or audible group conversation in an online environment amongst multiple chat participants, even though the chat participants may be strangers, do not know each other well, and/or only know each other online. Some implementations can learn facts about the various chat participants that can be stored and referenced in future messages in the group conversation, and/or in future messages in other group conversations involving one or more of the chat participants. Further, some implementations can keep the conversation current and can act of a source of information, being knowledgeable about the situations and attributes of each of the participants in the chat. Some implementations can allow for more natural group conversations between disparate users by simulating the type of social norms and actions a human might take to stimulate social conversation. Thus, implementations can improve the functionality of online chatrooms, online multiplayer environments, and one-on-one conversations between a user and a chatbot.

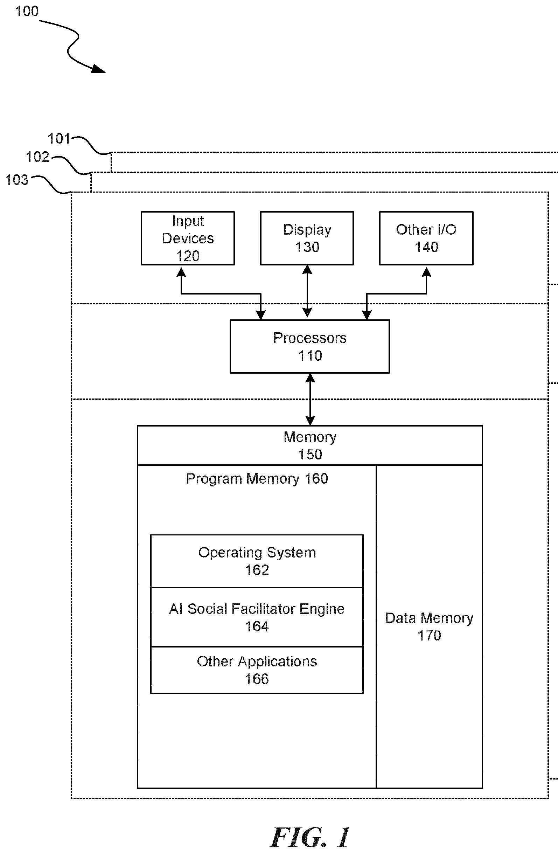

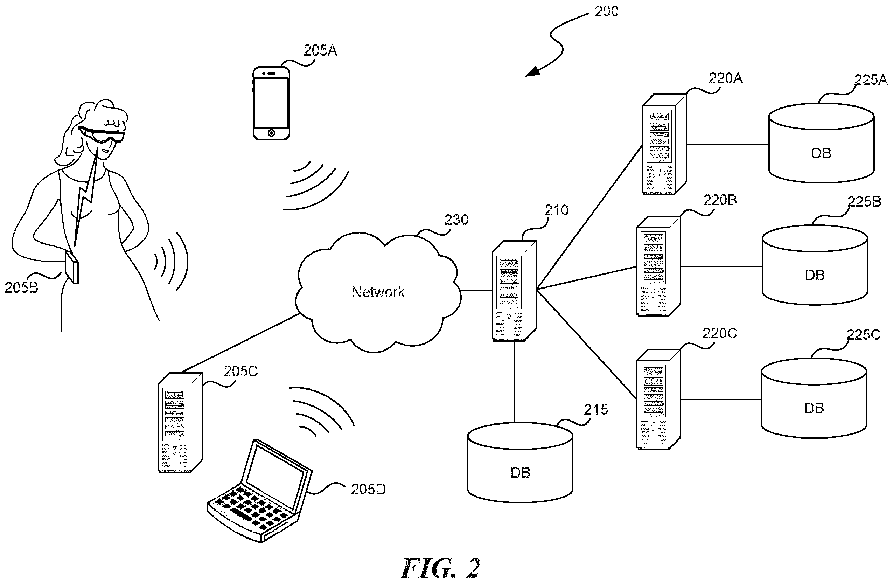

Several implementations are discussed below in more detail in reference to the figures. Figure 1 is a block diagram illustrating an overview of devices on which some implementations of the disclosed technology can operate. The devices can comprise hardware components of a computing system 100 that can facilitate a group conversation. In various implementations, computing system 100 can include a single computing device 103 or multiple computing devices (e.g., computing device 101, computing device 102, and computing device 103) that communicate over wired or wireless channels to distribute processing and share input data. In some implementations, computing system 100 can include a stand-alone headset capable of providing a computer created or augmented experience for a user without the need for external processing or sensors. In other implementations, computing system 100 can include multiple computing devices such as a headset and a core processing component (such as a console, mobile device, or server system) where some processing operations are performed on the headset and others are offloaded to the core processing component. Example headsets are described below in relation to Figures 2A and 2B. In some implementations, position and environment data can be gathered only by sensors incorporated in the headset device, while in other implementations one or more of the non-headset computing devices can include sensor components that can track environment or position data.

Computing system 100 can include one or more processor(s) 110 (e.g., central processing units (CPUs), graphical processing units (GPUs), holographic processing units (HPUs), etc.) Processors 110 can be a single processing unit or multiple processing units in a device or distributed across multiple devices (e.g., distributed across two or more of computing devices 101-103).

Computing system 100 can include one or more input devices 120 that provide input to the processors 110, notifying them of actions. The actions can be mediated by a hardware controller that interprets the signals received from the input device and communicates the information to the processors 110 using a communication protocol. Each input device 120 can include, for example, a mouse, a keyboard, a touchscreen, a touchpad, a wearable input device (e.g., a haptics glove, a bracelet, a ring, an earring, a necklace, a watch, etc.), a camera (or other light-based input device, e.g., an infrared sensor), a microphone, or other user input devices.

Processors 110 can be coupled to other hardware devices, for example, with the use of an internal or external bus, such as a PCI bus, SCSI bus, or wireless connection. The processors 110 can communicate with a hardware controller for devices, such as for a display 130. Display 130 can be used to display text and graphics. In some implementations, display 130 includes the input device as part of the display, such as when the input device is a touchscreen or is equipped with an eye direction monitoring system. In some implementations, the display is separate from the input device. Examples of display devices are: an LCD display screen, an LED display screen, a projected, holographic, or augmented reality display (such as a heads-up display device or a head-mounted device), and so on. Other I/O devices 140 can also be coupled to the processor, such as a network chip or card, video chip or card, audio chip or card, USB, firewire or other external device, camera, printer, speakers, CD-ROM drive, DVD drive, disk drive, etc.

In some implementations, input from the I/O devices 140, such as cameras, depth sensors, IMU sensor, GPS units, LiDAR or other time-of-flights sensors, etc. can be used by the computing system 100 to identify and map the physical environment of the user while tracking the user's location within that environment. This simultaneous localization and mapping (SLAM) system can generate maps (e.g., topologies, girds, etc.) for an area (which may be a room, building, outdoor space, etc.) and/or obtain maps previously generated by computing system 100 or another computing system that had mapped the area. The SLAM system can track the user within the area based on factors such as GPS data, matching identified objects and structures to mapped objects and structures, monitoring acceleration and other position changes, etc.

Computing system 100 can include a communication device capable of communicating wirelessly or wire-based with other local computing devices or a network node. The communication device can communicate with another device or a server through a network using, for example, TCP/IP protocols. Computing system 100 can utilize the communication device to distribute operations across multiple network devices.

The processors 110 can have access to a memory 150, which can be contained on one of the computing devices of computing system 100 or can be distributed across of the multiple computing devices of computing system 100 or other external devices. A memory includes one or more hardware devices for volatile or non-volatile storage, and can include both read-only and writable memory. For example, a memory can include one or more of random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. Memory 150 can include program memory 160 that stores programs and software, such as an operating system 162, artificial intelligence (Al) social facilitator engine 164, and other application programs 166. Memory 150 can also include data memory 170 that can include, e.g., metadata objects of signals, conversation data, action data, response data, response type data, large language model data, natural language processing data, configuration data, settings, user options or preferences, etc., which can be provided to the program memory 160 or any element of the computing system 100.

Some implementations can be operational with numerous other computing system environments or configurations. Examples of computing systems, environments, and/or configurations that may be suitable for use with the technology include, but are not limited to, XR headsets, personal computers, server computers, handheld or laptop devices, cellular telephones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, or the like.

Figure 2 is a block diagram illustrating an overview of an environment 200 in which some implementations of the disclosed technology can operate. Environment 200 can include one or more client computing devices 205A-D, examples of which can include computing system 100. In some implementations, some of the client computing devices (e.g., client computing device 205B) can be the HMD 200 or the HMD system 250. Client computing devices 205 can operate in a networked environment using logical connections through network 230 to one or more remote computers, such as a server computing device.

In some implementations, server 210 can be an edge server which receives client requests and coordinates fulfillment of those requests through other servers, such as servers 220A-C. Server computing devices 210 and 220 can comprise computing systems, such as computing system 100. Though each server computing device 210 and 220 is displayed logically as a single server, server computing devices can each be a distributed computing environment encompassing multiple computing devices located at the same or at geographically disparate physical locations.

Client computing devices 205 and server computing devices 210 and 220 can each act as a server or client to other server/client device(s). Server 210 can connect to a database 215. Servers 220A-C can each connect to a corresponding database 225A-C. As discussed above, each server 210 or 220 can correspond to a group of servers, and each of these servers can share a database or can have their own database. Though databases 215 and 225 are displayed logically as single units, databases 215 and 225 can each be a distributed computing environment encompassing multiple computing devices, can be located within their corresponding server, or can be located at the same or at geographically disparate physical locations.

Network 230 can be a local area network (LAN), a wide area network (WAN), a mesh network, a hybrid network, or other wired or wireless networks. Network 230 may be the Internet or some other public or private network. Client computing devices 205 can be connected to network 230 through a network interface, such as by wired or wireless communication. While the connections between server 210 and servers 220 are shown as separate connections, these connections can be any kind of local, wide area, wired, or wireless network, including network 230 or a separate public or private network.

In some implementations, servers 210 and 220 can be used as part of a social network. The social network can maintain a social graph and perform various actions based on the social graph. A social graph can include a set of nodes (representing social networking system objects, also known as social objects) interconnected by edges (representing interactions, activity, or relatedness). A social networking system object can be a social networking system user, nonperson entity, content item, group, social networking system page, location, application, subject, concept representation or other social networking system object, e.g., a movie, a band, a book, etc. Content items can be any digital data such as text, images, audio, video, links, webpages, minutia (e.g., indicia provided from a client device such as emotion indicators, status text snippets, location indictors, etc.), or other multi-media. In various implementations, content items can be social network items or parts of social network items, such as posts, likes, mentions, news items, events, shares, comments, messages, other notifications, etc. Subjects and concepts, in the context of a social graph, comprise nodes that represent any person, place, thing, or idea.

A social networking system can enable a user to enter and display information related to the user's interests, age / date of birth, location (e.g., longitude/latitude, country, region, city, etc.), education information, life stage, relationship status, name, a model of devices typically used, languages identified as ones the user is facile with, occupation, contact information, or other demographic or biographical information in the user's profile. Any such information can be represented, in various implementations, by a node or edge between nodes in the social graph. A social networking system can enable a user to upload or create pictures, videos, documents, songs, or other content items, and can enable a user to create and schedule events. Content items can be represented, in various implementations, by a node or edge between nodes in the social graph.

A social networking system can enable a user to perform uploads or create content items, interact with content items or other users, express an interest or opinion, or perform other actions. A social networking system can provide various means to interact with non-user objects within the social networking system. Actions can be represented, in various implementations, by a node or edge between nodes in the social graph. For example, a user can form or join groups, or become a fan of a page or entity within the social networking system. In addition, a user can create, download, view, upload, link to, tag, edit, or play a social networking system object. A user can interact with social networking system objects outside of the context of the social networking system. For example, an article on a news web site might have a "like" button that users can click. In each of these instances, the interaction between the user and the object can be represented by an edge in the social graph connecting the node of the user to the node of the object. As another example, a user can use location detection functionality (such as a GPS receiver on a mobile device) to "check in" to a particular location, and an edge can connect the user's node with the location's node in the social graph.

A social networking system can provide a variety of communication channels to users. For example, a social networking system can enable a user to email, instant message, or text/SMS message, one or more other users. It can enable a user to post a message to the user's wall or profile or another user's wall or profile. It can enable a user to post a message to a group or a fan page. It can enable a user to comment on an image, wall post or other content item created or uploaded by the user or another user. And it can allow users to interact (via their personalized avatar) with objects or other avatars in an artificial reality environment, etc. In some embodiments, a user can post a status message to the user's profile indicating a current event, state of mind, thought, feeling, activity, or any other present-time relevant communication. A social networking system can enable users to communicate both within, and external to, the social networking system. For example, a first user can send a second user a message within the social networking system, an email through the social networking system, an email external to but originating from the social networking system, an instant message within the social networking system, an instant message external to but originating from the social networking system, provide voice or video messaging between users, or provide an artificial reality environment were users can communicate and interact via avatars or other digital representations of themselves. Further, a first user can comment on the profile page of a second user, or can comment on objects associated with a second user, e.g., content items uploaded by the second user.

Social networking systems enable users to associate themselves and establish connections with other users of the social networking system. When two users (e.g., social graph nodes) explicitly establish a social connection in the social networking system, they become "friends" (or, "connections") within the context of the social networking system. For example, a friend request from a "John Doe" to a "Jane Smith," which is accepted by "Jane Smith," is a social connection. The social connection can be an edge in the social graph. Being friends or being within a threshold number of friend edges on the social graph can allow users access to more information about each other than would otherwise be available to unconnected users. For example, being friends can allow a user to view another user's profile, to see another user's friends, or to view pictures of another user. Likewise, becoming friends within a social networking system can allow a user greater access to communicate with another user, e.g., by email (internal and external to the social networking system), instant message, text message, phone, or any other communicative interface. Being friends can allow a user access to view, comment on, download, endorse or otherwise interact with another user's uploaded content items. Establishing connections, accessing user information, communicating, and interacting within the context of the social networking system can be represented by an edge between the nodes representing two social networking system users.

In addition to explicitly establishing a connection in the social networking system, users with common characteristics can be considered connected (such as a soft or implicit connection) for the purposes of determining social context for use in determining the topic of communications. In some embodiments, users who belong to a common network are considered connected. For example, users who attend a common school, work for a common company, or belong to a common social networking system group can be considered connected. In some embodiments, users with common biographical characteristics are considered connected. For example, the geographic region users were born in or live in, the age of users, the gender of users and the relationship status of users can be used to determine whether users are connected. In some embodiments, users with common interests are considered connected. For example, users' movie preferences, music preferences, political views, religious views, or any other interest can be used to determine whether users are connected. In some embodiments, users who have taken a common action within the social networking system are considered connected. For example, users who endorse or recommend a common object, who comment on a common content item, or who RSVP to a common event can be considered connected. A social networking system can utilize a social graph to determine users who are connected with or are similar to a particular user in order to determine or evaluate the social context between the users. The social networking system can utilize such social context and common attributes to facilitate content distribution systems and content caching systems to predictably select content items for caching in cache appliances associated with specific social network accounts.

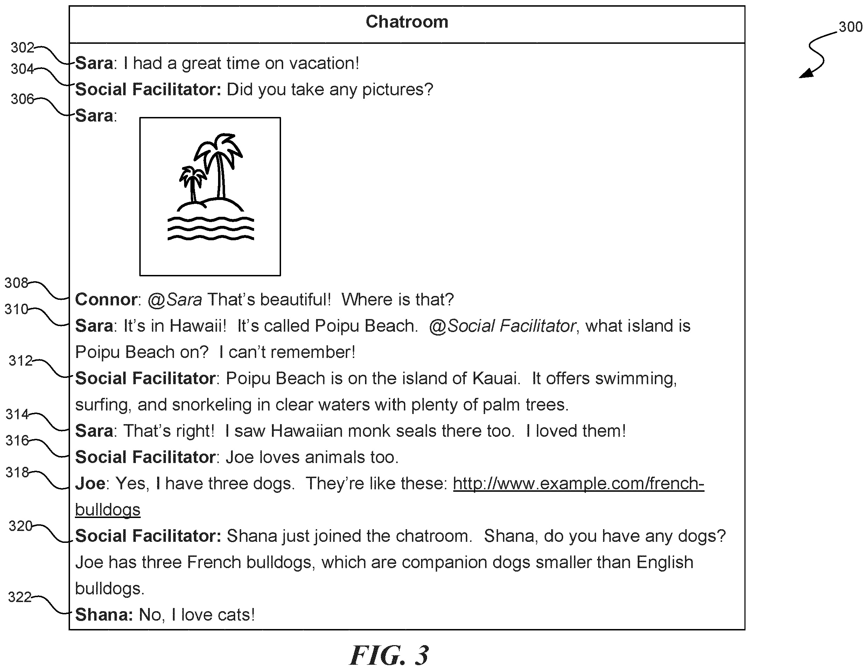

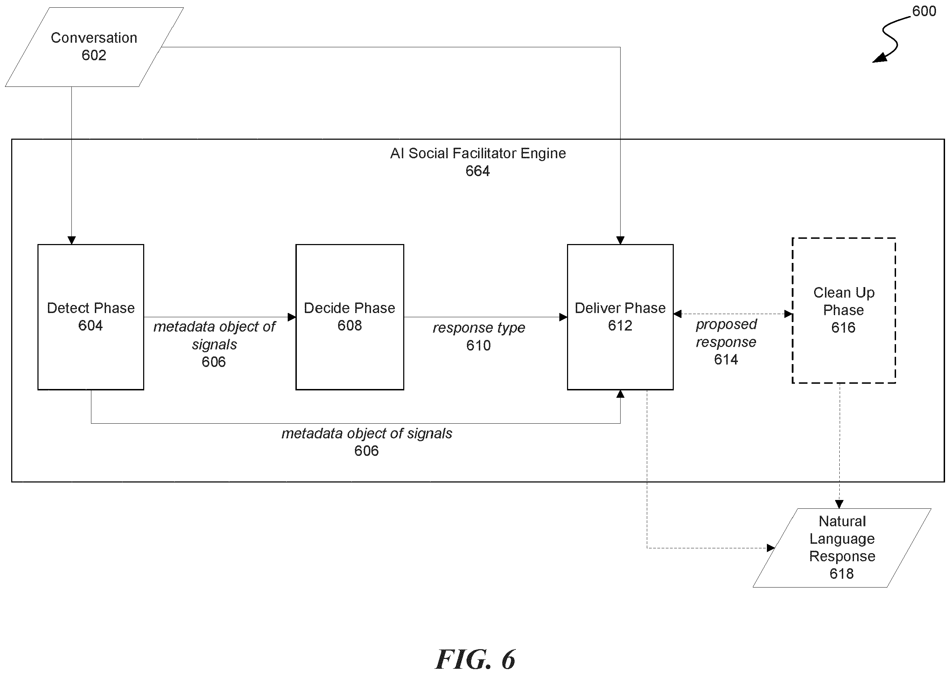

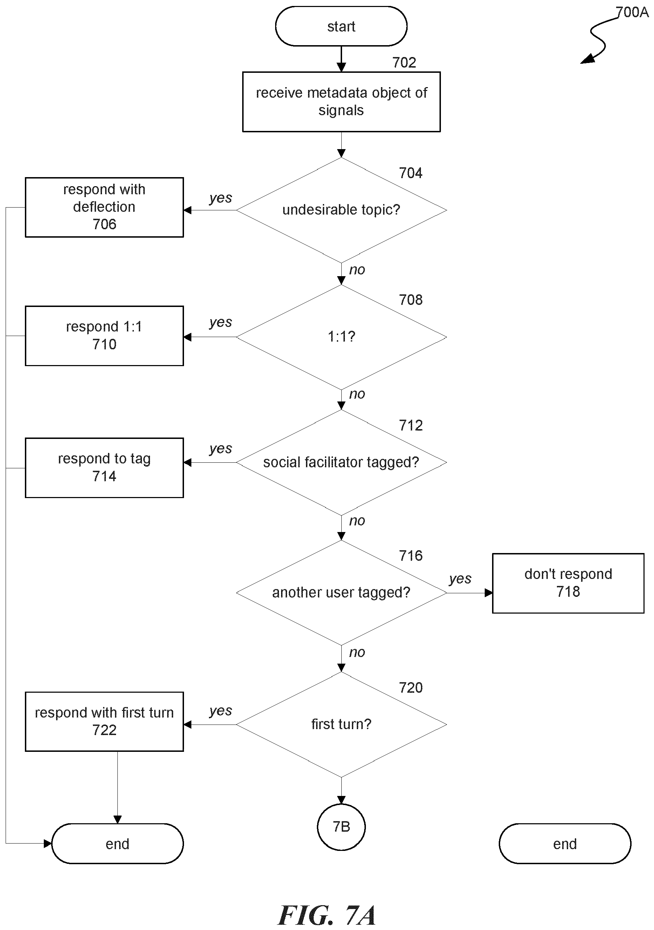

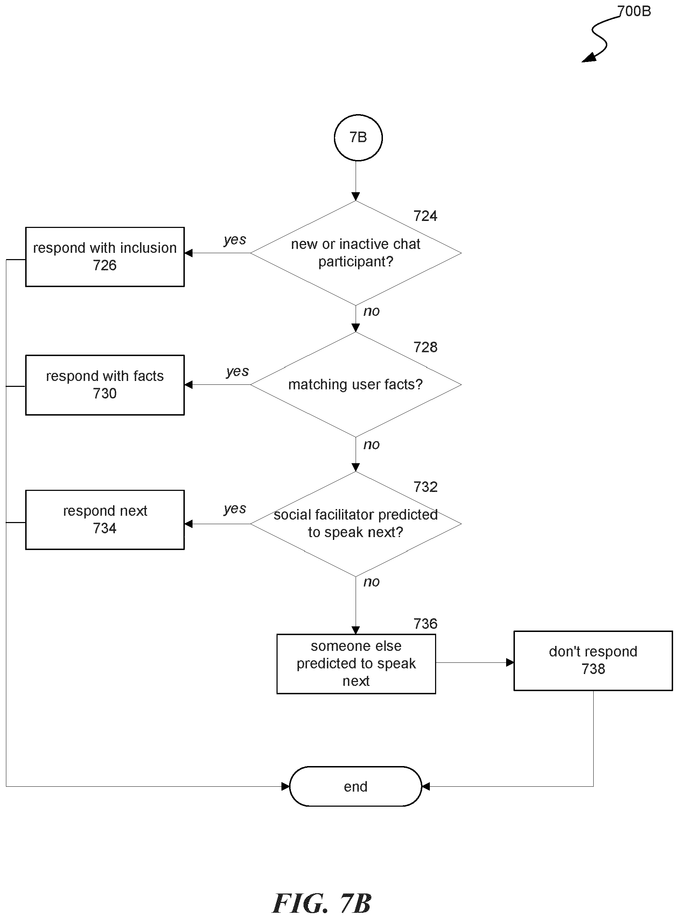

Figure 3 is a conceptual diagram illustrating an example group conversation 300 facilitated by an AI social facilitator engine. The AI social facilitator engine can be, for example, AI social facilitator engine 164 of Figure 1 and/or AI social facilitator engine 664 of Figure 6. Group conversation 300 can include multiple turns 302-320 made by multiple users, as well as by turns made by the AI social facilitator engine. Turn 302 can be a message from Sara, stating, "I had a great time on vacation!" The AI social facilitator engine can, based on turn 302, predict that it should speak next, such as at block 732 of Figure 7B. In another example, if the AI social facilitator engine and Sara are the only chat participants at the time Sara makes turn 302, the AI social facilitator engine can predict that it should be speak next at block 708 of Figure 7A. Further, in some implementations, the AI social facilitator can collect a fact about Sara that she was recently on vacation. The AI social facilitator engine can make turn 304, stating: "Did you take any pictures?"

Sara can respond with turn 306, which is a picture from her time on vacation. In some implementations, the AI social facilitator engine can collect facts from the picture, such as by performing object recognition and/or object detection on the picture. In some implementations, the AI social facilitator engine can determine that it is not predicted to speak next, e.g., at block 732 of Figure 7B, and/or that someone else is predicted to speak next, e.g., at block 736 of Figure 7B. Thus, the AI social facilitator can not respond to turn 306, e.g., as indicated by block 738 of Figure 7B. Instead, Conner can respond at turn 308 with a tag, "@Sara," and a message: "That's beautiful! Where is that?" The AI social facilitator engine can determine that another user is tagged, i.e., Sara, such as at block 716 of Figure 7A. Thus, the AI social facilitator engine can not respond, e.g., according to block 718 of Figure 7A, and allow Sara to respond. In some implementations, the AI social facilitator engine can collect facts about Connor, such as that he found the picture shared by Sara at turn 306 to be beautiful.

At turn 310, Sara can respond with: "It's in Hawaii! It's called Poipu Beach. @Social Facilitator, what island is Poipu Beach on? I can't remember!" In some implementations, the AI social facilitator engine can collect facts about Sara from the response, such that she recently went on vacation to Poipu Beach in Hawaii. In some implementations, the AI social facilitator engine can determine that it has been tagged, e.g., at block 712 of Figure 7A, and determine that it should respond to the tag, e.g., according to block 714 of Figure 7A. Based on turn 310, the AI social facilitator engine can parse the question, "what island is Poipu Beach on?", from the message. In some implementations, the AI social facilitator engine can query a database (either locally, remotely, or on a cloud) for an answer to the question, and respond with turn 312, e.g., "Poipu Beach is on the island of Kauai. It offers swimming, surfing, and snorkeling in clear waters with plenty of palm trees." In some implementations, the AI social facilitator engine can use facts shared by Sara to formulate turn 312, e.g., can use the picture in turn 306 to ascertain that there are clear waters and palm trees.

At turn 314, Sara can respond: "That's right! I saw Hawaiian monk seals there too. I loved them!" In some implementations, the AI social facilitator engine can collect facts about Sara from turn 314, e.g., that she has seen and loves Hawaiian monk seals. In some implementations, the AI social facilitator engine can determine that Joe and Sara having matching user facts (e.g., they both love animals), at block 728 of Figure 7B. Thus, according to block 730 of Figure 7B, the AI social facilitator engine can determine that it should respond with the matching user facts. At turn 316, the AI social facilitator engine can respond with "Joe loves animals too." In some implementations, the AI social facilitator engine can access such a fact about Joe from a previous group conversation involving the AI social facilitator engine.

At turn 318, Joe can respond: "Yes, I have three dogs. They're like these: http://www.example.com/french-bulldogs". In some implementations, the AI social facilitator engine can collect facts about Joe from turn 318, e.g., that he loves dogs. In some implementations, the AI social facilitator engine can further access the link supplied by Joe in turn 318 to determine further user facts; in this case, that Joe has French bulldogs. In some implementations, the AI social facilitator engine can further glean other facts useful to group conversation 300 from the linked website.

The AI social facilitator engine can determine that it should speak at turn 320. For example, at block 724 of Figure 7B, the AI social facilitator engine can determine that a new chat participant has joined, e.g., Shana. Thus, according to block 726, the AI social facilitator engine can respond with inclusion of Shana. For example, at turn 320, the AI social facilitator engine can state, "Shana just joined the chatroom. Shana, do you have any dogs?", in order to introduce Shana and include Shana in group conversation 300. The AI social facilitator engine can further use the context of group conversation 300 and facts gleaned from Joe and/or the link included in turn 318 to formulate a message, e.g., "Joe has three French bulldogs, which are companion dogs smaller than English bulldogs." At turn 322, Shana can respond: "No, I love cats!" The AI social facilitator engine can glean facts about Shana from turn 322, e.g., that she loves cats.

Thus, the AI social facilitator engine can facilitate group conversation 300 amongst multiple chat participants, even though the chat participants may not be familiar with each other. The AI social facilitator engine can learn facts about the various chat participants, potentially over time in past group conversations involving different chat participants. Thus, group conversation 300 can flow more naturally and provide a better user experience. In addition, although illustrated as a textual group conversation 300 in a chatroom, it is contemplated that group conversation 300 can instead be an audible conversation captured by respective microphones on user devices associated with respective chat participants, such as in an artificial reality (XR) experience, multiplayer experience, online experience, etc.

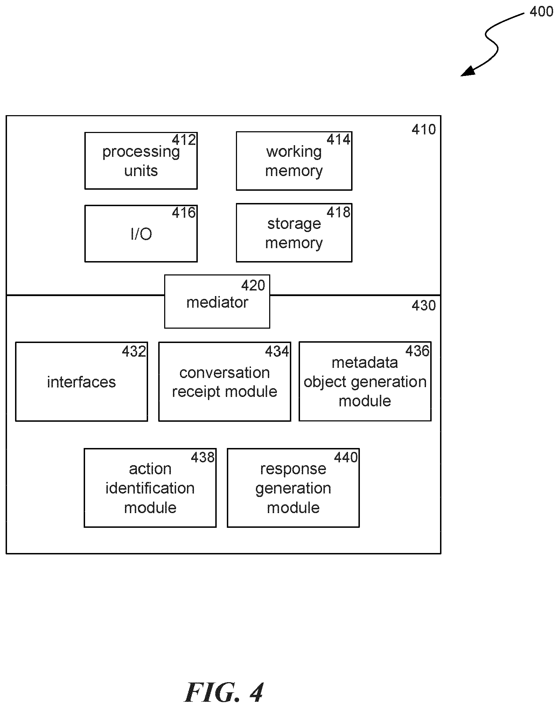

Figure 4 is a block diagram illustrating components 400 which, in some implementations, can be used in a system employing the disclosed technology. Components 400 can be included in one device of computing system 100 or can be distributed across multiple of the devices of computing system 100. The components 400 include hardware 410, mediator 420, and specialized components 430. As discussed above, a system implementing the disclosed technology can use various hardware including processing units 412, working memory 414, input and output devices 416 (e.g., cameras, displays, IMU units, network connections, etc.), and storage memory 418. In various implementations, storage memory 418 can be one or more of: local devices, interfaces to remote storage devices, or combinations thereof. For example, storage memory 418 can be one or more hard drives or flash drives accessible through a system bus or can be a cloud storage provider (such as in storage 215 or 225) or other network storage accessible via one or more communications networks. In various implementations, components 400 can be implemented in a client computing device such as client computing devices 205 or on a server computing device, such as server computing device 210 or 220.

Mediator 420 can include components which mediate resources between hardware 410 and specialized components 430. For example, mediator 420 can include an operating system, services, drivers, a basic input output system (BIOS), controller circuits, or other hardware or software systems.

Specialized components 430 can include software or hardware configured to perform operations for facilitating group conversation. Specialized components 430 can include conversation receipt module 434, metadata object generation module 436, action identification module 438, response generation module 440, and components and APIs which can be used for providing user interfaces, transferring data, and controlling the specialized components, such as interfaces 432. In some implementations, components 400 can be in a computing system that is distributed across multiple computing devices or can be an interface to a server-based application executing one or more of specialized components 430. Although depicted as separate components, specialized components 430 may be logical or other nonphysical differentiations of functions and/or may be submodules or code-blocks of one or more applications.

Conversation receipt module 434 can receive a group conversation. In some implementations, the group conversation can be a textual and/or audible conversation. In some implementations, the group conversation can include multimedia messages, such as messages including images, sounds, videos, etc., and/or other attachments. With respect to textual and/or multimedia messages, the group conversation can be a conversation in a chatroom, on a website, on a comment thread, on a text messaging application, on an e-mail application, in an artificial reality (XR) space, messages on another application, such as a social media application, etc. In some implementations, the group conversation can be an audible conversation captured by microphones associated with respective user devices of chat participants, e.g., XR devices, computing devices, television devices, video gaming devices, and/or a combination thereof. Conversation receipt module 434 can receive the group conversation via individual text and/or audio messages from respective user devices over any suitable network, such as network 230 of Figure 2.

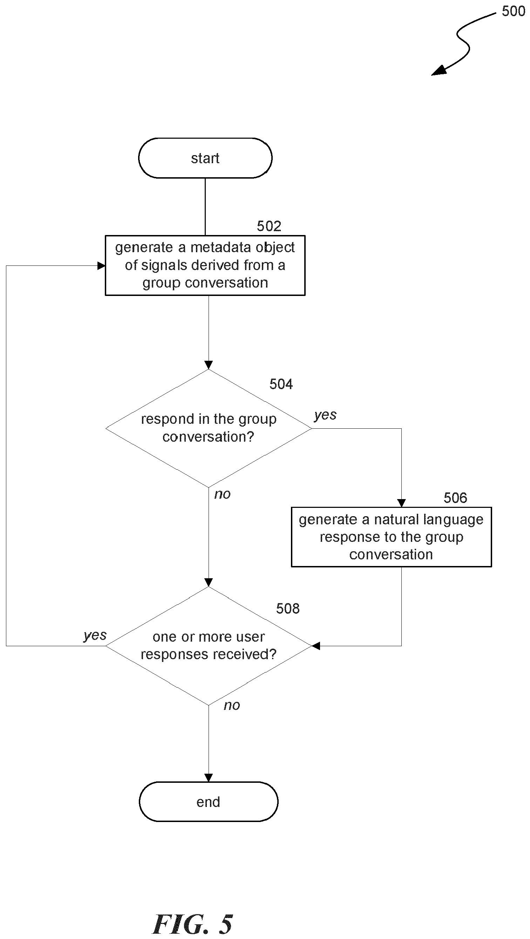

Metadata object generation module 436 can generate a metadata object of signals derived from the group conversation by analyzing one or more existing features of the group conversation. The metadata object of signals can be a vector of features extracted from the group conversation, such as a topic of conversation, facts from the conversation, facts regarding users in the conversation, the last user to speak, any tagged users in the conversation, the previous turn of the conversation, a prediction of who will respond next in the group conversation, etc. In some implementations, the group conversation can include multiple users participating in the group conversation via their respective user devices. In some implementations, the group conversation can be a one-on-one conversation between a user and an AI social facilitator engine defined by components 400, such as AI social facilitator engine 164 of Figure 1 and/or AI social facilitator engine 664 of Figure 6. Further details regarding generating a metadata object of signals derived from a group conversation are described herein with respect to block 502 of Figure 5.

Action identification module 438 can identify an action of multiple possible actions with respect to the group conversation using the metadata object of signals. The action can be mapped to at least one of the one or more existing features of the group conversation, and the action can include a response type. In some implementations, the action can be to not respond in the group conversation (e.g., a "first action" as used herein). In some implementations, the decision not to respond can be based on another user (i.e., other than the AI social facilitator engine comprising components 400) being tagged in the group conversation. In some implementations, the decision not to respond can be based on another user being predicted to speak next, based on the metadata object of signals.

When action identification module 438 identifies an action of a decision not to respond in the group conversation, conversation receipt module 434 can receive one or more subsequent responses from user devices associated with respective users in the group conversation. Further details regarding receiving one or more subsequent user responses in the group conversation are described herein with respect to block 508 of Figure 5. Metadata object generation module 436 can update the metadata object of signals derived from the group conversation by analyzing one or more new features of the group conversation based on the one or more user responses received by conversation receipt module 434. Action identification module 438 can then identify another action of the multiple possible actions using the updated metadata object of signals. In some implementations, the other action can again be a decision to not respond in the group conversation based on, for example, a prediction that a user device of the respective user devices will transmit a response in the group conversation next. In some implementations, the other action can be a decision to respond in the group conversation (e.g., a "second action" as used herein).

In some implementations, action identification module 438 can identify an action of a decision to respond in the group conversation. The decision to respond in the group conversation can be based on, for example, an undesirable topic being brought up, a one-on-one conversation between the AI social facilitator engine and a user, the AI social facilitator engine being tagged, a new or inactive chat participant within the group conversation, matching facts between two or more users, the AI social facilitator engine being predicted to speak next, and/or the like. Further details regarding identifying an action of multiple possible actions with respect to a group conversation using a metadata object of signals are described herein with respect to block 504 of Figure 5.

Response generation module 440 can generate a natural language response to the group conversation in accordance with the identified action by applying a model to a transcript of the group conversation, the metadata object of signals, and the response type. In some implementations, response generation module 440 can feed the transcript of the group conversation, the metadata object of signals, and the response type into a large language model. As used herein, a large language model can be a model large in size (e.g., at least ten of gigabytes) that is trained on a very large amount of text data (e.g., up to petabytes in size) from which the model can identify parameters. The parameters can be values that the model can change independently that are learned from historical training data (e.g., historical conversations, historical actions taken in the conversations, and/or historical natural language responses), and can define the ability of the model to generate an acceptable natural language response. In some implementations, the large language model can apply at least one of artificial intelligence, deep learning, or both. In some implementations, response generation module 440 can apply a different model to the transcript of the group conversation, the metadata object of signals, and the response type, such as a fine-tuned language model and/or an edge language model. In some implementations, the output of the model can be refined by applying natural language processing techniques to a proposed response, including natural language understanding and/or natural language generation techniques. Further details regarding generating a natural language response to a group conversation are described herein with respect to block 506 of Figure 5.

Those skilled in the art will appreciate that the components illustrated in Figures 1-2 and 4 described above, and in each of the flow diagrams discussed below, may be altered in a variety of ways. For example, the order of the logic may be rearranged, substeps may be performed in parallel, illustrated logic may be omitted, other logic may be included, etc. In some implementations, one or more of the components described above can execute one or more of the processes described below.

Figure 5 is a flow diagram illustrating a process 500 used in some implementations for facilitating group conversation by an artificial intelligence (Al) social facilitator engine. In some implementations, process 500 can be performed as a response to a conversation being joined and/or initiated (e.g., through text or by speaking) by one or more users. In some implementations, process 500 can be performed at any point during an online group conversation with one or more users. In some implementations, process 500 can be performed by the AI social facilitator engine, such as AI social facilitator engine 164 of Figure 1 and/or AI social facilitator engine 664 of Figure 6. In some implementations, the AI social facilitator engine can be part of a platform or developer computing system (e.g., a server) located remotely from user device(s) being used by user(s) to engage in the group conversation.

At block 502, process 500 can generate a metadata object of signals derived from a group conversation by analyzing one or more existing features of the group conversation. The group conversation can include one or more users (e.g., chat participants) participating and/or available to participate in the group conversation via respective user devices. In some implementations, the group conversation can include multiple users participating in the group conversation. In some implementations, the metadata object of signals can be a vector of facts that may be relevant to the group conversation, such as user facts, news articles, image captions, topics of conversation, etc. In some implementations, the metadata object of signals can indicate at least one of a prediction of which user device of the respective user devices will transmit a user response next, one or more facts about one or more users in the group conversation, a topic of the group conversation, or any combination thereof. In other words, at block 502, process 500 can prepare data that may be useful to decide on a next course of action in the group conversation. In some implementations, block 502 can be performed by a detect phase of an AI social facilitator engine, such as detect phase 604 of AI social facilitator engine 664 of Figure 6, described further herein.

In some implementations, the group conversation can be a textual conversation, an audible conversation, or both. In some implementations, the textual conversation can include multimedia (e.g., images, videos, audio files, etc.) and/or hyperlinks to websites or other online services. In implementations in which the group conversation is an audible conversation, process 500 can apply speech recognition techniques to generate a textual transcript of the audible conversation that can be used in future steps of process 500. In some implementations, the group conversation can be within an artificial reality (XR) experience. In some implementations, the group conversation can be in an online chatroom. In some implementations, the group conversation can be in a comment thread on a social media platform. In some implementations, the group conversation can be a group message on a messaging platform, such as a text messaging platform, a messaging application or component within an application, e-mail, etc.

At block 504, process 500 can determine whether to respond in the group conversation based on the metadata object of signals. In other words, process 500 can identify an action to decide to respond in the group conversation by the AI social facilitator engine, or an action to decide not to respond in the group conversation by the AI social facilitator engine. In some implementations, at block 504, process 500 can determine not to respond in the group conversation. In some implementations, a decision not to respond, by the AI social facilitator engine, in the group conversation, can be based on a tag of a user in the group conversation by another user (e.g., "@Kari" or "Kari," followed by a question or comment). In some implementations, the decision not to respond by the AI social facilitator engine in the group conversation can be based on the prediction that a user device, of the one or more respective user devices, will transmit a response in the group conversation next. Thus, process 500 can determine that it should not respond in the group conversation at block 504, and allow another user to formulate the next response. In some implementations, a decision not to respond in a group conversation at block 504 can be made by a decide phase of an AI social facilitator engine, such as decide phase 608 of AI social facilitator engine 664 of Figure 6, described further herein. Further details regarding decisions not to respond are described herein with respect to processes 700A-700B of Figures 7A-7B.

If process 500 determines that it should not respond in the group conversation at block 504, process 500 can proceed to block 508. At block 508, process 500 can determine whether one or more subsequent user responses have been received from one or more user devices associated with respective users of the one or more users. For example, if process 500 determines not to respond in the group conversation at block 504, one or more other users can respond in the group conversation instead. The one or more responses can include new features in the group conversation, such as a different topic of conversation, a tag of the AI social facilitator engine in the group conversation, an undesirable topic, a determination of a new or inactive user, a fact about a user, etc. If one or more subsequent responses are received from one or more users at block 508, process 500 can return to block 502 and generate an updated metadata object of signals derived from the group conversation, including analyzing one or more new features of the group conversation based on the received one or more user responses. In some implementations, the updated metadata object of signals can include a vector of facts representative of the one or more new features. Process 500 can then continue to block 504, and so on and so forth. If no subsequent user responses have been received at block 508 (e.g., for a threshold period of time, because all of the users left the group conversation, etc.), process 500 can end.

In some implementations, at block 504, process 500 can decide to respond in the group conversation. In some implementations, the decision to respond can include a response type, such as a method by which to respond. For example, the response type can be to respond with deflection of an undesirable topic, respond in a one-on-one conversation between the user and the AI social facilitator engine, respond to a tag of the AI social facilitator engine, respond with a first turn in the conversion (e.g., a first message in the conversation), respond with inclusion of a new or inactive user in the conversation, respond with matching facts, or respond next based on a prediction that the AI social facilitator engine should speak next. In some implementations, a decision to respond in a group conversation at block 504 can be made by a decide phase of an AI social facilitator engine, such as decide phase 608 of AI social facilitator engine 664 of Figure 6, described further herein. Further details regarding decisions to respond and response types are described herein with respect to processes 700A-700B of Figures 7A-B.

If process 500 determines that it should respond in the group conversation at block 504, process 500 can continue to block 506. At block 506, process 500 can generate, by the AI social facilitator engine, a natural language response to the group conversation by applying a model to a transcript of the group conversation, the updated metadata object of signals, and the response type. In some implementations, the model can be a large language model. In some implementations, the large language model can receive the transcript of the conversation and the metadata object of signals as input, and generate the natural language response based on the response type. For example, for a response type of inclusion, the AI social facilitator engine can formulate a natural language message introducing the new or inactive user in the conversation, and possibly asking a question to that user relevant to the conversation (as indicated by the transcript and the metadata object of signals) to include the user into the conversation. As another example, for a response type of "respond with deflection," the AI social facilitator engine can formulate a natural language message on a different topic using user facts indicated by the metadata object of signals, such as a particular interest of a user that has not yet been spoken about in-depth based on the transcript of the conversation. In some implementations, a deliver phase of an AI social facilitator engine can generate the natural language response to the group conversation at block 506, such as deliver phase 612 of AI social facilitator engine 664, described further herein.

Process 500 can then proceed to block 508 to determine whether one or more subsequent user responses have been received, as described further herein. If one or more user responses have been received at block 508, process 500 can continue to block 502, and so on and so forth. If no subsequent user responses have been received (e.g., for a threshold period of time, because all of the users left the group conversation, etc.), process 500 can end.

It is contemplated that process 500 can decide to respond at block 504, decide not to respond at block 504, and vice versa, over several iterations. In addition, it is contemplated that process 500 can only make decisions to respond at block 504 without making a decision not to respond at block 504, e.g., in a one-on-on conversation between a user and the AI social facilitator engine. Conversely, it is contemplated that process 500 can only make decisions not to respond at block 504 without making a decision to respond at block 504, e.g., when another user is predicted to speak next, when another user is tagged in the conversation, etc., over several consecutive turns in the conversation.

Figure 6 is a block diagram illustrating an overview 600 of an AI social facilitator engine 664 according to some implementations of the present technology. In some implementations, AI social facilitator engine 664 can be similar to AI social facilitator engine 164 of Figure 1. AI social facilitator engine 664 can receive conversation 602 as input. Conversation 602 can be a textual, multimedia, and/or audible conversation. In some implementations in which conversation 602 is an audible conversation, AI social facilitator engine 664 can convert conversation 602 into a textual transcript using speech recognition, natural language processing, and/or transcription techniques. In some implementations in which conversation 602 includes multimedia messages having images and/or video, AI social facilitator engine 664 can perform object recognition and/or detection techniques to identify objects in the images and/or video. In some implementations, conversation 602 can include hyperlinks to websites that AI social facilitator engine 664 can access to glean facts potentially useable in conversation 602.

Within AI social facilitator engine 664, conversation 602 can be fed into a detect phase 604. Detect phase 604 can be a signal gathering phase in which AI social facilitator engine 664 can look at many aspects of conversation 602 that already exist and try to find information that is relevant for making a decision about what to say next. For example, in detect phase 604, AI social facilitator engine 664 can understand the topic of conversation 602, can extract facts used in conversation 602, can determine whether extracted facts will be useful, etc. In some implementations, detect phase 604 can interrogate a social graph, as described herein with respect to Figure 2. For example, when a new chat participant joins conversation 602, detect phase 604 can use the social graph to determine whether the new participant already knows the other participants, which can be relevant to whether and how to respond in conversation 602. In other words, in detect phase 604, AI social facilitator engine 664 can prepare information that it might need to know to make a decision about how to respond next (or to not respond). Using this information, detect phase 604 can generate metadata object of signals 606 that is provided to decide phase 608.ln decide phase 608, AI social facilitator engine 664 can look at metadata object of signals 606 and decide on what type of conversational move to make, i.e., decide on a course of action. For example, in decide phase 608, AI social facilitator engine 664 can decide to make an introduction (e.g., introduce someone joining conversation 602, introduce someone inactive in conversation 602, etc.). In another example, in decide phase 608, AI social facilitator engine 664 can decide to perform fact matching between two users, e.g., given metadata object of signals 606, AI social facilitator engine 664 should connect two users. In another example, in decide phase 608, AI social facilitator engine 664 can decide to deflect conversation 602 into another topic based on an undesirable topic arising in the conversation, as described further herein with respect to block 704 of Figure 7A. Further details regarding logic performed during the decide phase is described herein with respect to processes 700A-700B of Figures 7A-7B. Once decide phase 608 decides what type of conversational move to make, decide phase 608 can provide response type 610 to deliver phase 612.

In deliver phase 612, AI social facilitator engine 664 can, given conversation 602, metadata object of signals 606, and response type 610, use a model to propose an actual textual response that corresponds to the determined response strategy. In some implementations, the model can be a large language model. For example, AI social facilitator engine 664 can use conversation 602, metadata object of signals 606, and response type 610 to determine what AI social facilitator engine 664 should say. Deliver phase 612 can then produce natural language response 618. However, it is contemplated that in some implementations, decide phase 608 can determine a response type 610 corresponding to no response; thus, deliver phase 612 will not be performed, and natural language response 618 will not be produced.

In some implementations, deliver phase 612 can provide proposed response 614 to clean up phase 616 before providing natural language response 618. For example, clean up phase 616 can apply heuristics that identify when there is repetition of a sequence of words or an entire sentence in proposed response 614 relative to conversation 602 and its history, including previous responses made by AI social facilitator engine 664 in conversation 602. In some implementations, clean up phase 616 can deny proposed response 614, and cannot provide natural language response 618. In some implementations, clean up phase 616 can return proposed response 614 to deliver phase 612 to regenerate proposed response 614, reword proposed response 614, etc. For example, deliver phase 612 can delete a repeated sequence of words from the history of conversation 602 such that when proposed response 614 is regenerated, the word(s) that triggered proposed response 614 are no longer there. In some implementations, deliver phase 612 can delete the history of conversation 602 entirely such that a repeated proposed response 614 will not be regenerated. In some implementations, deliver phase 612 can rewrite the history of conversation 602, e.g., by summarizing it, such that a repeated proposed response 614 will not be regenerated. If proposed response 614 is acceptable, clean up phase 616 can deliver proposed response 614 as natural language response 618 as output from AI social facilitator engine 664.

Figures 7A-7B are flow diagrams illustrating an overview of decisions made by an artificial intelligence (Al) social facilitator engine in a decide phase according to some implementations of the present technology. In some implementations, processes 700A-B can be performed by an AI social facilitator engine, such as AI social facilitator engine 164 of Figure 1 and/or AI social facilitator engine 664 of Figure 6. In some implementations, process 700A, followed by process 700B, can be performed as a response to receiving a metadata object of signals from a detect phase of an AI social facilitator engine, e.g., metadata object of signals 606 generated by detect phase 604 based on conversation 602 of Figure 6. In some implementations, process 700A-B can be performed by a decide phase of an AI social facilitator engine, such as decide phase 608 of AI social facilitator engine 664 of Figure 6.

At block 702, process 700A can receive a metadata object of signals, e.g., metadata object of signals 606 of Figure 6. Based on the metadata object of signals received at block 702, process 700A can determine, at block 704, whether the conversation is on an undesirable topic. The undesirable topic can be, for example, an argument, a contentious topic, an immoral or illegal topic, a personal topic, an intrusive topic, etc. If the conversation is on an undesirable topic, process 700A can proceed to block 706. At block 706, process 700A can respond with deflection. For example, decide phase 608 can pass a response type 610 of "respond with deflection" to deliver phase 612 of Figure 6. If the conversation is not on an undesirable topic, process 700A can proceed to block 708.

At block 708, based on the metadata object of signals received at block 702, process 700A can determine whether the conversation is one-on-one. In other words, process 700A can determine whether the conversation includes only one user and the AI social facilitator engine. If the conversation is one-on-one, process 700A can proceed to block 710. At block 710, process 700A can respond one-on-one. For example, decide phase 608 can pass a response type 610 of "respond 1:1" to deliver phase 612 of Figure 6. If the conversation is not one-on-one, process 700A can proceed to block 712.

At block 712, based on the metadata object of signals received at block 702, process 700A can determine whether the AI social facilitator engine was tagged in the conversation. For example, a message in the conversation can state, "@AI Social Facilitator Engine, what's in the news today?" In some implementations, process 700A can further determine whether the AI social facilitator engine was tagged in the most recent turn in the conversation, i.e., the last message sent in the conversation. If the AI social facilitator engine was tagged in the conversation, process 700A can proceed to block 714. At block 714, process 700A can respond to the message including the tag. For example, decide phase 608 can pass a response type 610 of "respond to tag" to deliver phase 612 of Figure 6. If the AI social facilitator engine was not tagged in the conversation, process 700A can proceed to block 716.

At block 716, based on the metadata object of signals received at block 702, process 700A can determine whether a user tagged another user in the conversation. For example, a message in the conversation can read, "@Kari, how was your day?" In some implementations, process 700A can further determine whether the other user was tagged in the most recent turn of the conversation. If another user was tagged in the conversation, process 700A can proceed to block 718. At block 718, process 700A can not respond in the conversation. For example, decide phase 608 can pass a response type 610 of "don't respond" to deliver phase 612 of Figure 6. If another user was not tagged in the conversation, process 700A can proceed to block 720.

At block 720, based on the metadata object of signals received at block 702, process 700A can determine whether it is the first turn in the conversation, i.e., whether no previous messages have been sent in the conversation. If it is the first turn in the conversation, process 700A can proceed to block 722. At block 722, process 700A can respond with the first turn in the conversation. For example, decide phase 608 can pass a response type 610 of "respond with first turn" to deliver phase 612 of Figure 6. If it is not the first turn in the conversation, process 700A can proceed to block 724 of process 700B of Figure 7B.

At block 724, based on the metadata object of signals received at block 702 of Figure 7A, process 700B can determine whether there is a new or inactive chat participant in the conversation. Process 700B can determine whether there is a new chat participant, for example, based on a new participant joining the conversation from a list of participants in the conversation. Process 700B can determine whether there is an inactive chat participant by, for example, determining whether a chat participant has not sent a message for a threshold number of turns in the conversation, e.g., the chat participant has never sent a message in the conversation, the chat participant has not send a message for the past 10 turns of the conversation, etc. If process 700B determines that there is a new or inactive chat participant in the conversation at block 724, process 700B can proceed to block 726. At block 726, process 700B can respond with inclusion. For example, decide phase 608 can pass a response type 610 of "respond with inclusion" to deliver phase 612 of Figure 6. If there is not a new or inactive chat participant in the conversation, process 700B can proceed to block 728.

At block 728, based on the metadata object of signals received at block 702 of Figure 7A, process 700B can determine whether there are matching user facts between two or more users in the conversation. For example, process 700B can make note of facts shared by users within the conversation (i.e., chat participants), such as, for example, at detect phase 604 of Figure 6, and can store such facts in conjunction with a user identifier. Process 700B can store such facts locally or remotely in a database accessible by process 700B, such as in data memory 170 of Figure 1. Process 700B can query the database with a particular fact shared by a user to determine if there are facts associated with other users matching the shared fact, e.g., by a predetermined threshold. In some implementations, process 700B can store facts shared by and/or associated with users over multiple conversations, i.e., not just in the current conversation, and can match such historically stored facts to facts shared in the current conversation. If process 700B determines that there are matching user facts, process 700B can proceed to block 730. At block 730, process 700B can respond with the matching user facts. For example, decide phase 608 can pass a response type 610 of "respond with facts" to deliver phase 612 in Figure 6. If there are not matching user facts, process 700B can proceed to block 732.

At block 732, based on the metadata object of signals received at block 702 of Figure 7A, process 700B can determine whether the AI social facilitator engine is predicted to speak next. In some implementations, process 700B can predict whether the AI social facilitator engine is predicted to speak next by presenting conversational context to a large language model. Each line of the conversational context can be one conversation turn, beginning with the speaking chat participant's name. Given this conversational context, process 700B can predict the next token corresponding to a next speaking chat participant's name. If the most likely token is the AI social facilitator engine, process 700B can determine that the AI social facilitator engine is predicted to speak next, and process 700B can proceed to block 734. At block 734, process 700B can respond next. For example, decide phase 608 can pass a response type 610 of "respond next" to deliver phase 612 of Figure 6. If the AI social facilitator engine is not predicted to speak next, process 700B can continue to block 736.

At block 736, based on the metadata object of signals received at block 702 of Figure 7A, process 700B can determine that someone else is predicted to speak next. For example, if at block 732, process 700B determines that the AI social facilitator engine is not predicted to speak next, process 700B can determine that someone else is predicted to speak next. If someone else is predicted to speak next, process 700B can proceed to block 738. At block 738, process 700B can not respond, i.e., can refrain from making the next turn in the conversation.

Although illustrated as a single iteration, it is contemplated that processes 700A-B can be repeated, consecutively, concurrently, and/or in parallel, as new and/or updated metadata objects of signals are received. Further, it is contemplated that processes 700A-B can be repeated, and/or performed concurrently and/or in parallel when multiple different conversations are being facilitated by the AI social facilitator engine. Further, although blocks 704, 708, 712, 716, 720, 724, 728, and 732 are illustrated in a particular order, it is contemplated that the blocks can be performed in a different order than that illustrated, and/or that some blocks may be omitted.

Reference in this specification to "implementations" (e.g., "some implementations," "various implementations," "one implementation," "an implementation," etc.) means that a particular feature, structure, or characteristic described in connection with the implementation is included in at least one implementation of the disclosure. The appearances of these phrases in various places in the specification are not necessarily all referring to the same implementation, nor are separate or alternative implementations mutually exclusive of other implementations. Moreover, various features are described which may be exhibited by some implementations and not by others. Similarly, various requirements are described which may be requirements for some implementations but not for other implementations.

As used herein, being above a threshold means that a value for an item under comparison is above a specified other value, that an item under comparison is among a certain specified number of items with the largest value, or that an item under comparison has a value within a specified top percentage value. As used herein, being below a threshold means that a value for an item under comparison is below a specified other value, that an item under comparison is among a certain specified number of items with the smallest value, or that an item under comparison has a value within a specified bottom percentage value. As used herein, being within a threshold means that a value for an item under comparison is between two specified other values, that an item under comparison is among a middle-specified number of items, or that an item under comparison has a value within a middle-specified percentage range. Relative terms, such as high or unimportant, when not otherwise defined, can be understood as assigning a value and determining how that value compares to an established threshold. For example, the phrase "selecting a fast connection" can be understood to mean selecting a connection that has a value assigned corresponding to its connection speed that is above a threshold.

As used herein, the word "or" refers to any possible permutation of a set of items. For example, the phrase "A, B, or C" refers to at least one of A, B, C, or any combination thereof, such as any of: A; B; C; A and B; A and C; B and C; A, B, and C; or multiple of any item such as A and A; B, B, and C; A, A, B, C, and C; etc.

Although the subject matter has been described in language specific to structural features and/or methodological acts, it is to be understood that the subject matter defined in the appended claims is not necessarily limited to the specific features or acts described above. Specific embodiments and implementations have been described herein for purposes of illustration, but various modifications can be made without deviating from the scope of the embodiments and implementations. The specific features and acts described above are disclosed as example forms of implementing the claims that follow. Accordingly, the embodiments and implementations are not limited except as by the appended claims.

Aspects can be modified, if necessary, to employ the systems, functions, and concepts of the various references described above to provide yet further implementations. If statements or subject matter in a document discussed herein conflicts with statements or subject matter of this application, then this application shall control.

Embodiments of the disclosed technology may include or be implemented in conjunction with an artificial reality system. Artificial reality or extra reality (XR) is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR" refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. "Mixed reality" or "MR" refers to systems where light entering a user's eye is partially generated by a computing system and partially composes light reflected off objects in the real world. For example, a MR headset could be shaped as a pair of glasses with a pass-through display, which allows light from the real world to pass through a waveguide that simultaneously emits light from a projector in the MR headset, allowing the MR headset to present virtual objects intermixed with the real objects the user can see. "Artificial reality," "extra reality," or "XR," as used herein, refers to any of VR, AR, MR, or any combination or hybrid thereof.

## Claims

1. A method for facilitating a group conversation by an artificial intelligence social facilitator engine, the method comprising:
generating a metadata object of signals derived from the group conversation by analyzing one or more existing features of the group conversation, the group conversation including multiple users participating in the group conversation via respective user devices;
identifying a first action of multiple possible actions with respect to the group conversation using the metadata object of signals, the first action being a decision not to respond by the artificial intelligence social facilitator engine in the group conversation;
receiving one or more user responses to the group conversation from one or more user devices associated with respective users of the multiple users;
updating the metadata object of signals derived from the group conversation by analyzing one or more new features of the group conversation based on the received one or more user responses;
identifying a second action of the multiple possible actions using the updated metadata object of signals, the second action being a decision to respond by the artificial intelligence social facilitator engine in the group conversation, wherein the decision to respond includes a response type; and
generating, by the artificial intelligence social facilitator engine, a natural language response to the group conversation by applying a model to a transcript of the group conversation, the updated metadata object of signals, and the response type.

2. The method of claim 1, wherein the natural language response is a deflection of a topic included in at least one of the one or more user responses to the group conversation.

3. The method of claim 1 or claim 2, wherein:
i. the metadata object of signals includes a prediction that a user device of the respective user devices will transmit a user response of the one or more user responses in the group conversation next, and
the decision not to respond by the artificial intelligence social facilitator engine in the group conversation is based on the prediction that the user device of the respective user devices will transmit the user response in the group conversation next; and/or
ii. the metadata object of signals indicates at least one of a prediction of which user device of the respective user devices will transmit a user response of the one or more user responses next, one or more facts about one or more users of the multiple users, a topic of the group conversation, or any combination thereof.

4. The method of claim 1, claim 2 or claim 3, wherein the decision not to respond, by the artificial intelligence social facilitator engine in the group conversation, is based on a tag of a user in the group conversation by another user of the multiple users; and/or preferably, wherein the decision to respond, by the artificial intelligence social facilitator engine in the group conversation, is based on a tag of the artificial intelligence social facilitator engine in the group conversation by a user of the multiple users.

5. The method of any one of the preceding claims, wherein the model is a large language model being at least ten gigabytes in size, the large language model being trained on text data and applying at least one of artificial intelligence, deep learning, or both, to generate the natural language response.

6. The method of any one of the preceding claims, wherein the group conversation is at least one of a textual conversation, an audible conversation, or both; and/or preferably,
wherein the group conversation is within an artificial reality experience.

7. A computer-readable storage medium storing instructions that, when executed by a computing system, cause the computing system to perform a process for facilitating a group conversation by an artificial intelligence social facilitator engine, the process comprising:
generating a metadata object of signals derived from the group conversation by analyzing one or more existing features of the group conversation, the group conversation including multiple users participating in the group conversation via respective user devices;
identifying an action of multiple possible actions with respect to the group conversation using the metadata object of signals, the action being mapped to at least one of the one or more existing features of the group conversation, and the action including a response type; and
generating, by the artificial intelligence social facilitator engine, a natural language response to the group conversation in accordance with the identified action by applying a model to a transcript of the group conversation, the metadata object of signals, and the response type.

8. The computer-readable storage medium of claim 7, wherein the action is a first action, and wherein the process further comprises:
receiving one or more user responses to the group conversation from one or more user devices associated with respective users of the multiple users;
updating the metadata object of signals derived from the group conversation by analyzing one or more new features of the group conversation based on the received one or more user responses; and
identifying a second action of the multiple possible actions using the updated metadata object of signals, the second action being a decision not to respond by the artificial intelligence social facilitator engine in the group conversation.

9. The computer-readable storage medium of claim 7 or claim 8, wherein one or more selected from:
i. the updated metadata object of signals includes a prediction that a user device of the respective user devices will transmit a user response of the one or more user responses in the group conversation next, and
the decision not to respond by the artificial intelligence social facilitator engine in the group conversation is based on the prediction that the user device of the respective user devices will transmit the user response in the group conversation next;
ii. the decision not to respond, by the artificial intelligence social facilitator engine in the group conversation, is based on a tag of a user in the group conversation by another user of the multiple users; and/or,
iii. the natural language response is a deflection of a topic included in at least one of the one or more user responses to the group conversation.

10. The computer-readable storage medium of claim 7, claim 8 or claim 9,
wherein the action is a decision to respond by the artificial intelligence social facilitator engine in the group conversation, and
wherein the decision to respond, by the artificial intelligence in the group conversation, is based on a tag of the artificial intelligence social facilitator engine in the group conversation by a user of the multiple users.

11. A computing system for facilitating a group conversation by an artificial intelligence social facilitator engine, the computing system comprising:
one or more processors; and
one or more memories storing instructions that, when executed by the one or more processors, cause the computing system to perform a process comprising:
generating a metadata object of signals derived from the group conversation by analyzing one or more existing features of the group conversation, the group conversation including multiple users participating in the group conversation via respective user devices;
identifying an action of multiple possible actions with respect to the group conversation using the metadata object of signals, the action being mapped to at least one of the one or more existing features of the group conversation, and the action including a response type; and
generating, by the artificial intelligence social facilitator engine, a natural language response to the group conversation in accordance with the identified action by applying a model to a transcript of the group conversation, the metadata object of signals, and the response type.

12. The computing system of claim 11, wherein the action is a first action, and wherein the process further comprises:
receiving one or more user responses to the group conversation from one or more user devices associated with respective users of the multiple users;
updating the metadata object of signals derived from the group conversation by analyzing one or more new features of the group conversation based on the received one or more user responses; and
identifying a second action of the multiple possible actions using the updated metadata object of signals, the second action being a decision not to respond by the artificial intelligence social facilitator engine in the group conversation.

13. The computing system of claim 12, wherein the metadata object of signals indicates at least one of a prediction of which user device of the respective user devices will transmit a user response of the one or more user responses next, one or more facts about one or more users of the multiple users, a topic of the group conversation, or any combination thereof.

14. The computing system of claim 11, claim 12 or claim 13, wherein the model is a large language model being at least ten gigabytes in size, the large language model being trained on text data and applying at least one of artificial intelligence, deep learning, or both, to generate the natural language response.

15. The computing system of any one of claims 11 to 14, wherein the group conversation is within an artificial reality experience.
